# EUROPEAN PATENT APPLICATION

(11) **EP 2 607 450 A1**
(43) Date of publication of application: **26.06.2013**
(21) Application number: 10856017.8
(22) Date of filing: 16.08.2010
(51) Int. Cl.: C09K 11/80

(54) **COLOR-ADJUSTABLE LUMINESCENT POWDER AND PREPARATION METHOD THEREOF**

(71) Applicant: Ocean's King Lighting Science&Technology Co., Ltd., Guangdong 518054 (CN)
(72) Inventor: ZHOU, Mingjie, Guangdong 518054 (CN); LU, Ting, Guangdong 518054 (CN); WANG, Yewen, Guangdong 518054 (CN); MA, Wenbo, Guangdong 518054 (CN)
(74) Representative: Schrell, Andreas
(86) International application number: PCT/CN2010/076012
(87) International publication number: WO 2012/022019

(57) **Abstract**

A color-adjustable luminescent powder is provided, the chemical general formula of which is (YₐGd_{b}Eu_{c})₂O₃·xZn₍₁₋ₘ₎AlₘO, wherein 0 ≤ a ≤ 0.99, 0 ≤ b ≤ 0.99, 0.01 ≤ c ≤ 0.08, provided that a + b + c = 1 and a and b are not 0 simultaneously; x is the molar ratio between Zn₍₁₋ₘ₎AlₘO and (YₐGd_{b}Eu_{c})₂O₃, 0.01 ≤ x ≤ 0.20, and 0.001 ≤ m ≤ 0.05. A preparation method of the above luminescent powder is also provided, which comprises the following steps: adding an aqueous alcohol solution containing a complexing agent, and a surfactant to a mixed solution containing needed components to obtain a precursor solution, then aging the precursor solution, undergoing calcination treatment and cooling to obtain the said luminescent powder.

## Description

### Technical Field

The present invention belongs to the technical field of photo-electronics and illumination, and particularly relates to a color-adjustable fluorescent powder and a method for preparing the same.

### Background

Along with the increasing development and application of high-quality display and illuminating devices in work and living, fluorescent powder having high efficiency and long service life has become an important component in illuminating and display devices. The performance of the fluorescent powder becomes a direct factor affecting the quality of the devices, especially field emission devices, wherein electrons are liable to accumulate on the surface of the fluorescent powder, which decreases the bombardment ability of the electron beam, and decreases the brightness of the devices. Therefore, the conductivity of the fluorescent powder has become a very important factor which restricts the performance of illuminating and display devices.

Currently used fluorescent materials are mainly zinc sulfide, and oxide and oxysulfide powders activated by rare earth ions. Sulfide fluorescent powders have relatively high luminescent brightness and certain conductivity, but are liable to decompose under the bombardment of large-beam electron beam, which decrease the luminescent efficiency of the fluorescent powder. Oxide fluorescent powders have good stability, but their luminescent efficiency under the bombardment of low voltage electron beam is not high enough, and the materials are nonconductive insulators, of which the performance needs improvement. Meanwhile, high-quality display and illuminating devices raise requirements on the color-adjustability of the fluorescent powder. Therefore, it has long been an important aspect of the research in the technical fields of materials, photo-electronics and illumination to achieve the color-adjustability of the luminescence of the fluorescent powder on the premise of achieving high luminescent brightness of the fluorescent powder.

### Summary

In view of the above, it is provided a fluorescent powder with high luminescent brightness and color-adjustability.

It is also provided a method for preparing a color-adjustable fluorescent powder.

A color-adjustable fluorescent powder has a chemical formula of (YₐGd_{b}Eu_{c})₂O₃·xZn(₁₋ₘ)AlₘO, wherein 0 ≤ a ≤ 0.99, 0 ≤ b ≤ 0.99, 0.01 ≤ c ≤ 0.08, and a + b + c = 1, a and b are not simultaneously 0, x is a molar ratio of Zn(₁₋ₘ)AlₘO to (YₐGd_{b}Eu_{c})₂O₃, 0.01 ≤ x ≤ 0.20, and 0.001 ≤ m ≤ 0.05.

In addition, a method for preparing a color-adjustable fluorescent powder comprises the steps of:
preparing a solution of Zn²⁺ and Al³⁺, and preparing a solution of Y³⁺, Eu³⁺ and Gd³⁺ or of Eu³⁺ and Gd³⁺ or of Y³⁺ and Eu³⁺ according to molar ratio of corresponding elements in a chemical formula of (YₐGd_{b}Eu_{c})₂O₃;
taking the above solutions according to corresponding molar ratio in a chemical formula of (YₐGd_{b}Eu_{c})₂O₃·xZn₍₁₋ₘ₎AlₘO, wherein 0 ≤ a ≤ 0.99, 0 ≤ b ≤ 0.99, 0.01 ≤ c ≤ 0.08, and a + b + c = 1, a and b are not simultaneously 0, x is a molar ratio of Zn₍₁₋ₘ₎AlₘO to (YₐGd_{b}Eu_{c})₂O₃, 0.01 ≤ x ≤ 0.20, and 0.001 ≤ m ≤ 0.05; and adding an alcohol-water mixed solution contain a complexing agent, and a surfactant to give a precursor solution; and
aging the precursor solution, calcinating, cooling and milling to give the color-adjustable fluorescent powder.

By introducing conductive material ZnAlO into the fluorescent powder, electrons accumulated on the surface of the fluorescent powder can be effectively led out, which increases the luminescent brightness of the obtained fluorescent powder under the excitation of cathode rays, improves the conductivity over the currently used fluorescent powders, and achieves the color-adjustability of the fluorescent powder by adjusting the ratio of the conductive materials which have luminescent properties and by changing the exciting voltage of the cathode rays.

### Brief Description of the Figures

Figure 1 shows a flow chart of the method for preparing a color-adjustable fluorescent powder of an embodiment of the present invention;
Figure 2 shows the spectra of the fluorescent powder prepared in Example 6 of the present invention under the excitation of cathode rays of 7 kV (a) and of 5 kV (b);
Figure 3 shows the color coordinates of the Y_{1.90}Eu_{0.10}O₃·0.05Zn_{0.97}Al_{0.03}O fluorescent powder prepared in Example 6 of the present invention under the excitation of cathode rays of 5 kV;
Figure 4 shows the color coordinates of the Y_{1.90}Eu_{0.10}O₃·0.05Zn_{0.97}Al_{0.03}O fluorescent powder prepared in Example 6 of the present invention under the excitation of cathode rays of 7 kV;
Figure 5 shows the spectra of the Y_{1.90}Eu_{0.10}O₃ fluorescent powder blended with various proportions of Zn_{0.97}Al_{0.03}O prepared in Examples 5 and 6 of the present invention under the excitation of cathode rays of 7 kV, wherein c is the spectrum of the Y_{1.90}Eu_{0.10}O₃·0.03Zn_{0.97}Al_{0.03}O fluorescent powder and d is the spectrum of the Y_{1.90}Eu_{0.10}O₃·0.05Zn_{0.97}Al_{0.03}O fluorescent powder;
Figure 6 shows the color coordinates of the Y_{1.90}Eu_{0.10}O₃·0.03Zn₀.₉₇Al₀.₀₃O fluorescent powder prepared in Example 5 of the present invention under the excitation of cathode rays of 7 kV; and
Figure 7 shows the color coordinates of the Y_{1.90}Eu_{0.10}O₃·0.05Zn_{0.97}Al_{0.03}O fluorescent powder prepared in Example 6 of the present invention under the excitation of cathode rays of 7 kV.

### Specific Embodiments

In order to make the objectives, the technical solutions and the advantages of the present invention more obvious, the present invention will be further described in detail in combination with the Figures and the embodiments. It shall be understood that the specific embodiments described herein are only to illustrate rather than to limit the present invention.

A color-adjustable fluorescent powder has a chemical formula of (YₐGd_{b}Eu_{c})₂O₃·xZn₍₁₋ₘ₎AlₘO, wherein 0 ≤ a ≤ 0.99, 0 ≤ b ≤ 0.99, 0.01 ≤ c ≤ 0.08, and a + b + c = 1, a and b are not simultaneously 0, x is a molar ratio of Zn₍₁₋ₘ₎AlₘO to (YₐGd_{b}Eu_{c})₂O₃, 0.01 ≤ x ≤ 0.20, and 0.001 ≤ m ≤ 0.05.

The difference of the ratio of Zn₍₁₋ₘ₎AlₘO in the fluorescent powder (YₐGd_{b}Eu_{c})₂O₃·xZn₍₁₋ₘ₎AlₘO would result in a corresponding change in the ratio of the fluorescent emission peak of Zn₍₁₋ₘ₎AlₘO at 400-600 nm to the fluorescent emission peak of rare earth elements at 600-625nm, thereby achieving the color adjustability of the fluorescent powder due to the difference of the ratio. Meanwhile, the mechamisms of the fluorescent emissions of Zn₍₁₋ₘ₎AlₘO and rare earth elements are different. When the excitation voltages change, the intensity of the two emission peaks would also change. Therefore, the color adjustability of the fluorescent powder can be achieved by changing the excitation voltage.

It is Zn₍₁₋ₘ₎AlₘO which is conductive in the fluorescent powder. It is a compound semi-conductor, which can effectively lead out electrons accumulated on the surface of the fluorescent powder, leading to an increase of the luminescent brightness of the prepared fluorescent powder under the excitation of cathod rays.

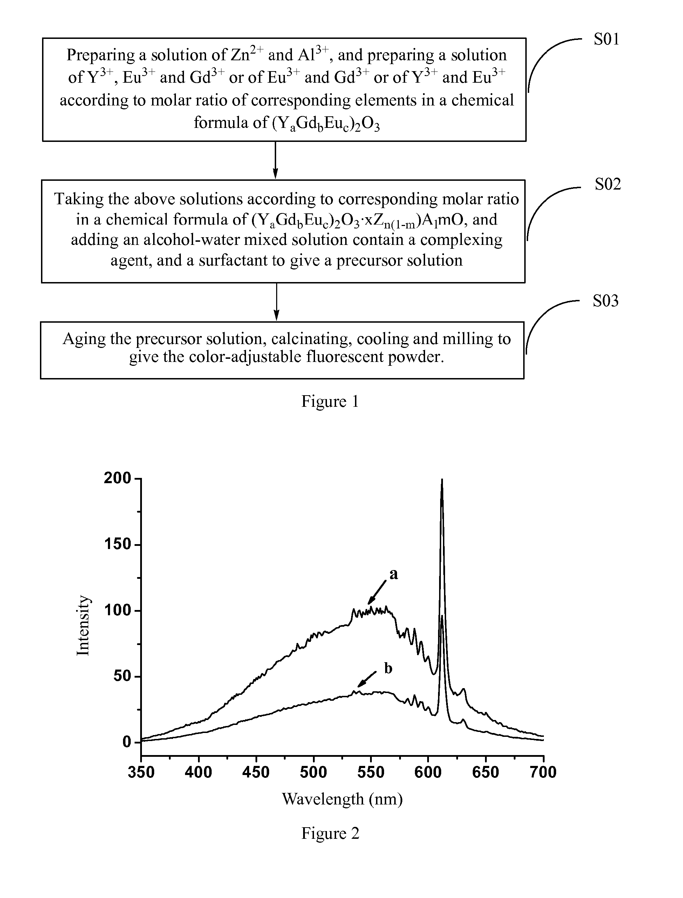

Referring to Figure 1, which shows a flow chart of the method for preparing a color-adjustable fluorescent powder of an embodiment of the present invention, the method comprised the steps of:
S01: preparing a solution of Zn²⁺ and Al³⁺, and preparing a solution of Y³⁺, Eu³⁺ and Gd³⁺ or of Eu³⁺ and Gd³⁺ or of Y³⁺ and Eu³⁺ according to molar ratio of corresponding elements in a chemical formula of (YₐGd_{b}Eu_{c})₂O₃;
S02: taking the above solutions according to corresponding molar ratio in a chemical formula of (YₐGd_{b}Eu_{c})₂O₃·xZn₍₁₋ₘ₎AlₘO, wherein 0 ≤ a ≤ 0.99, 0 ≤ b ≤ 0.99, 0.01 ≤ c ≤ 0.08, and a + b + c = 1, a and b are not simultaneously 0, x is a molar ratio of Zn₍₁₋ₘ₎AlₘO to (YₐGd_{b}Eu_{c})₂O₃, 0.01 ≤ x ≤ 0.20, and 0.001 ≤ m ≤ 0.05; and adding an alcohol-water mixed solution contain a complexing agent, and a surfactant to give a precursor solution; and
S03: aging the precursor solution, calcinating, cooling and milling to give the color-adjustable fluorescent powder.

In step S01, the solution of Zn²⁺ and Al³⁺ may be prepared from corresponding soluble salts thereof, such as acetate, nitrate, chloride and sulfate. Specifically, the reactants are weighed in appropriate amounts and dissolved in de-ionized water in a container to give a solution in which the total concentration of Zn²⁺ and Al³⁺ may be 0.1∼2.00 mol/L, and the molar ratio of Zn²⁺ to Al³⁺ may be 99.9:0.1∼95:5. The solution of Y³⁺, Eu³⁺ and Gd³⁺ (solution I) or of Eu³⁺ and Gd³⁺ (solution II) or of Y³⁺ and Eu³⁺ (solution III) may be prepared from corresponding soluble salts thereof, such as nitrate and chloride, or may be prepared from oxides or oxalates of the rare earth elements. When soluble salts are used, the preparation method is similar to that of solution of Zn²⁺ and Al³⁺. When the oxides or oxalates of the rare earth elements is used, the specific procedure comprises: dissolving appropriate amounts of the oxides or oxalates of the rare earth elements in analytical pure hydrochloric acid (36∼37%, 11.7 mol/L) or analytical pure nitric acid (65∼68%, 14.4∼15.2 mol/L) in a container at 15°C∼100°C under heating and stirring, and adding de-ionized water to achieve a required concentration.

Step S02 specifically comprises: weighing an appropriate amount of the prepared solution I or solution II or solution III; adding the prepared solution of Zn²⁺ and Al³⁺ while keeping the molar ratio of Zn²⁺ and Al³⁺ to the solution I or solution II or solution III at (0.01∼0.20):1; adding an alcohol-water mixed solution contain a complexing agent, to prepare 40 mL of an alcohol-water solution of the solution I or solution II or solution III containing Zn²⁺ and Al³⁺ at a concentration of 0.1∼1.00 mol/L, wherein the volume ratio of water to alcohol is 1 : (1∼7), and the molar ratio of citric acid to the metal ions in the raw material is kept at (1∼5):1; adding a surfactant into the solution to give a concentration of the surfactant of 0.05~0.20 g/mL. The prepared alcohol-water solution of the solution I or solution II or solution III impregnated with Zn²⁺ and Al³⁺ is stirred for 2∼6 h in a 40∼70°C water bath, and then placed in an oven at 60∼100°C and aged for 40-60 h to give a gel of the solution I or solution II or solution III impregnated with Zn²⁺ and Al³⁺. The complexing agent is preferably analytical pure citric acid. The surfactant is preferably at least one of analytical pure polyethylene glycol 6000, polyethylene glycol 8000, polyethylene glycol 10000, and polyethylene glycol 20000.

Step S03 specifically comprises: placing the prepared solution I or solution II or solution III impregnated with Zn²⁺ and Al³⁺ in an oven at 100∼200°C and aging for 48-96 h, drying, placing the dried product in a corundum crucible, calcinating for 0.5~6 h at 800∼1300°C in an air atmosphere, cooling, and milling.

The method for preparing the color-adjustable fluorescent powder employs a sol-gel method, wherein the product can be obtained by merely controlling the temperature and adding the reactants in an appropriated proportion. Therefore, the method for preparing the color-adjustable fluorescent powder has a simple process, low requirement on the equipments, and low preparation cycle.

Various compositions of the color-adjustable fluorescent powder and the methods for the preparation thereof and the performances thereof are illustrated by various examples.

### Example 1

21.9281 g of Zn(CH₃COO)₂·2H₂O and 0.0375 g of Al(NO₃)₃·9H₂O are weighed and dissovled in 100 mL of de-ionized water to prepared a 1 mol/L aqueous solution of Zn²⁺ and Al³⁺, wherein the molar ratio of Zn²⁺ to Al³⁺ is 99.9:0.1.

37.9180 g of Y(NO₃)₃·6H₂O and 0.4441 g of Eu(NO₃)₃·6H₂O are weighed and dissolved in de-ionized water to prepare a 1 mol/L aqueous solution of Y³⁺ and Eu³⁺, wherein the molar ratio of Eu³⁺ to Y³⁺ is 1:99.

To 4 mL of the 1 mol/L aqueous solution of Y³⁺ and Eu³⁺ are added 1 mL of de-ionized water and 35 mL of absolute ethanol, followed by adding 0.4 mL of the prepared aqueous solution of Zn²⁺ and Al³⁺, 3.3817 g of citric acid and 2 g of polyethylene glycol 10000. The resulted mixture is stirred for 4 h in a 60°C water bath to give a precursor solution of Y³⁺ and Eu³⁺ impregnated with Zn²⁺ and Al³⁺. The precursor solution is then placed in an oven at 90°C and aged for 40 h to give a homogeneous gel of Y³⁺ and Eu³⁺ impregnated with Zn²⁺ and Al³⁺.

The prepared gel is placed in an oven at 100°C and is dried for 48 h, and then kept in a muffle furnace at 800°C for 2 h, followed by cooling and milling to give a fluorescent powder having a chemical formula of Y_{1.98}Eu_{0.02}O₃·0.1Zn_{0.999}Al_{0.001}O.

### Example 2

43.0220 g of Zn(CH₃COO)₂·2H₂O and 1.1502 g of ZnSO₄·7H₂O are weighed and dissovled in 100 mL of de-ionized water to prepared a 2 mol/L aqueous solution of Zn²⁺ and Al³⁺, wherein the molar ratio of Zn²⁺ to Al³⁺ is 98:2.

76.5254 g of Y(NO₃)₃·6H₂O and 0.8920 g of Eu(NO₃)₃·6H₂O are weighed and dissolved in de-ionized water to prepare a 2 mol/L aqueous solution of Y³⁺ and Eu³⁺, wherein the molar ratio of Eu³⁺ to Y³⁺ is 1:99.

To 20 mL of the 2.00 mol/L aqueous solution of Y³⁺ and Eu³⁺ are added 20 mL of absolute ethanol, 0.2 mL of the prepared aqueous solution of Zn²⁺ and Al³⁺, 7.7625 g of citric acid and 8 g of polyethylene glycol 10000. The resulted mixture is stirred for 6 h in a 50°C water bath to give a precursor solution of Y³⁺ and Eu³⁺ impregnated with Zn²⁺ and Al³⁺. The precursor solution is then placed in an oven at 60°C and aged for 60 h to give a gel of Y³⁺ and Eu³⁺ impregnated with Zn²⁺ and Al³⁺.

The prepared gel is placed in an oven at 200°C and is dried for 50 h, and then kept in a muffle furnace at 1000°C for 3 h, followed by cooling and milling to give a fluorescent powder having a chemical formula of Y_{1.98}Eu_{0.02}O₃·0.01Zn_{0.98}Al_{0.02}O.

### Example 3

10.5769 g of ZnCl₂ and 0.9003 g of Al(NO₃)₃·9H₂O are weighed and dissovled in 100 mL of de-ionized water to prepared a 0.8 mol/L aqueous solution of Zn²⁺ and Al³⁺, wherein the molar ratio of Zn²⁺ to Al³⁺ is 97:3.

18.7675 g of Y(NO₃)₃·6H₂O and 0.4461 g of Eu(NO₃)₃·6H₂O are weighed and dissolved in de-ionized water to prepare a 0.5 mol/L aqueous solution of Y³⁺ and Eu³⁺, wherein the molar ratio of Eu³⁺ to Y³⁺ is 1:49.

To 8 mL of the 0.50 mol/L aqueous solution of Y³⁺ and Eu³⁺ are added 32 mL of absolute ethanol, 0.5 mL of the prepared aqueous solution of Zn²⁺ and Al³⁺, 4.2271 g of citric acid and 4 g of polyethylene glycol 8000. The resulted mixture is stirred for 6 h in a 40°C water bath to give a precursor solution of Y³⁺ and Eu³⁺ impregnated with Zn²⁺ and Al³⁺. The precursor solution is then placed in an oven at 90°C and aged for 60 h to give a gel of Y³⁺ and Eu³⁺ impregnated with Zn²⁺ and Al³⁺.

The prepared gel is placed in an oven at 150°C and is dried for 96 h, and then kept in a muffle furnace at 1300°C for 0.5 h, followed by cooling and milling to give a fluorescent powder having a chemical formula of Y_{1.96}Eu_{0.04}O₃·0.1Zn_{0.97}Al_{0.03}O.

### Example 4

22.3147 g of ZnSO₄·7H₂O and 0.5794 g of AlCl₃·6H₂O are weighed and dissovled in 100 mL of de-ionized water to prepared a 0.8 mol/L aqueous solution of Zn²⁺ and Al³⁺, wherein the molar ratio of Zn²⁺ to Al³⁺ is 97:3.

37.9180 g of Y(NO₃)₃·6H₂O and 0.4441 g of Eu(NO₃)₃·6H₂O are weighed and dissolved in de-ionized water to prepare a 1 mol/L aqueous solution of Y³⁺ and Eu³⁺, wherein the molar ratio of Eu³⁺ to Y³⁺ is 1:99.

To 20 mL of the 1.00 mol/L aqueous solution of Y³⁺ and Eu³⁺ are added 20 mL of absolute ethanol, 1.25 mL of the prepared aqueous solution of Zn²⁺ and Al³⁺, 4.0349 g of citric acid and 5 g of polyethylene glycol 20000. The resulted mixture is stirred for 4 h in a 60°C water bath to give a precursor solution of Y³⁺ and Eu³⁺ impregnated with Zn²⁺ and Al³⁺. The precursor solution is then placed in an oven at 80°C and aged for 56 h to give a gel of Y³⁺ and Eu³⁺ impregnated with Zn²⁺ and Al³⁺.

The prepared gel is placed in an oven at 100°C and is dried for 96 h, and then kept in a muffle furnace at 800°C for 6 h, followed by cooling and milling to give a fluorescent powder having a chemical formula of Y_{1.98}Eu_{0.02}O₃·0.05Zn_{0.97}Al_{0.03}O.

### Example 5

22.3147 g of ZnSO₄·7H₂O and 0.5794 g of AlCl₃·6H₂O are weighed and dissovled in 100 mL of de-ionized water to prepared a 0.8 mol/L aqueous solution of Zn²⁺ and Al³⁺, wherein the molar ratio of Zn²⁺ to Al³⁺ is 97:3.

28.6899 g of yttrium oxalate and 1.7201 g of europium oxalate are weighed and dissolved in 20 mL of nitric acid under stirring at 15°C, to which is added de-ionized water to make up to 100 mL to prepare a 1 mol/L aqueous solution of Y³⁺ and Eu³⁺, wherein the molar ratio of Eu³⁺ to Y³⁺ is 1:19.

To 20 mL of the 1.00 mol/L aqueous solution of Y³⁺ and Eu³⁺ are added 20 mL of absolute ethanol, 0.75 mL of the prepared aqueous solution of Zn²⁺ and Al³⁺, 7.9162 g of citric acid and 4 g of polyethylene glycol 10000. The resulted mixture is stirred for 4 h in a 70°C water bath to give a precursor solution of Y³⁺ and Eu³⁺ impregnated with Zn²⁺ and Al³⁺. The precursor solution is then placed in an oven at 60°C and aged for 60 h to give a gel of Y³⁺ and Eu³⁺ impregnated with Zn²⁺ and Al³⁺.

The prepared gel is placed in an oven at 100°C and is dried for 56 h, and then kept in a muffle furnace at 1000°C for 2 h, followed by cooling and milling to give a fluorescent powder having a chemical formula of Y_{1.90}Eu_{0.10}O₃·0.03Zn_{0.97}Al_{0.03}O.

### Example 6

22.3147 g of ZnSO₄·7H₂O and 0.5794 g of AlCl₃·6H₂O are weighed and dissovled in 100 mL of de-ionized water to prepared a 0.8 mol/L aqueous solution of Zn²⁺ and Al³⁺, wherein the molar ratio of Zn²⁺ to Al³⁺ is 97:3.

28.6899 g of yttrium oxalate and 1.7201 g of europium oxalate are weighed and dissolved in 20 mL of nitric acid under stirring at 15°C, to which is added de-ionized water to make up to 100 mL to prepare a 1 mol/L aqueous solution of Y³⁺ and Eu³⁺, wherein the molar ratio of Eu³⁺ to Y³⁺ is 1:19.

To 20 mL of the 1.00 mol/L aqueous solution of Y³⁺ and Eu³⁺ are added 20 mL of absolute ethanol, 1.25 mL of the prepared aqueous solution of Zn²⁺ and Al³⁺, 7.9162 g of citric acid and 4 g of polyethylene glycol 10000. The resulted mixture is stirred for 4 h in a 70°C water bath to give a precursor solution of Y³⁺ and Eu³⁺ impregnated with Zn²⁺ and Al³⁺. The precursor solution is then placed in an oven at 60°C and aged for 60 h to give a gel of Y³⁺ and Eu³⁺ impregnated with Zn²⁺ and A1³⁺.

The prepared gel is placed in an oven at 100°C and is dried for 56 h, and then kept in a muffle furnace at 1000°C for 2 h, followed by cooling and milling to give a fluorescent powder having a chemical formula of Y_{1.90}Eu_{0.10}O₃·0.05Zn_{0.97}Al_{0.03}O.

### Example 7

21.9281 g of Zn(CH₃COO)₂·2H₂O and 0.0375 g of Al(NO₃)₃·9H₂O are weighed and dissovled in 100 mL of de-ionized water to prepared a 1 mol/L aqueous solution of Zn²⁺ and Al³⁺, wherein the molar ratio of Zn²⁺ to Al³⁺ is 99.9:0.1.

10.7260 g of Y₂O₃ and 0.8798 g of Eu₂O₃ are weighed and dissolved in 27 mL of hydrochloric acid under stirring at 60°C, to which is added de-ionized water to make up to 100 mL to prepare a 1 mol/L aqueous solution of Y³⁺ and Eu³⁺ wherein the molar ratio of Eu³⁺ to Y³⁺ is 1:19.

To 8 mL of the 1.00 mol/L aqueous solution of Y³⁺ and Eu³⁺ are added 32 mL of absolute ethanol, 1.6 mL of the prepared aqueous solution of Zn²⁺ and Al³⁺, 7.3781 g of citric acid and 7 g of polyethylene glycol 6000. The resulted mixture is stirred for 4 h in a 60°C water bath to give a precursor solution of Y³⁺ and Eu³⁺ impregnated with Zn²⁺ and Al³⁺. The precursor solution is then placed in an oven at 70°C and aged for 60 h to give a gel of Y³⁺ and Eu³⁺ impregnated with Zn²⁺ and Al³⁺.

The prepared gel is placed in an oven at 120°C and is dried for 48 h, and then kept in a muffle furnace at 1000°C for 2 h, followed by cooling and milling to give a fluorescent powder having a chemical formula of Y_{1.90}Eu_{0.10}O₃·0.2Zn_{0.999}Al_{0.001}O.

### Example 8

2.8857 g of Zn(NO₃)₂·6H₂O and 0.0724 g of AlCl₃·6H₂O are weighed and dissovled in 100 mL of de-ionized water to prepared a 0.1 mol/L aqueous solution of Zn²⁺ and Al³⁺, wherein the molar ratio of Zn²⁺ to Al³⁺ is 97:3.

42.4281 g of Gd(NO₃)₃·6H₂O and 2.6760 g of Eu(NO₃)₃·6H₂O are weighed and dissolved in de-ionized water to prepare 1 L of a 0.1 mol/L aqueous solution of Gd³⁺ and Eu³⁺, wherein the molar ratio of Eu³⁺ to Gd³⁺ is 3:47.

To 20 mL of the 0.1 mol/L aqueous solution of Gd³⁺ and Eu³⁺ are added 20 mL of absolute ethanol, 1.6 mL of the prepared aqueous solution of Zn²⁺ and Al³⁺, 2.0751 g of citric acid and 5 g of polyethylene glycol 10000. The resulted mixture is stirred for 2 h in a 70°C water bath to give a precursor solution of Gd³⁺ and Eu³⁺ impregnated with Zn²⁺ and Al³⁺. The precursor solution is then placed in an oven at 90°C and aged for 40 h to give a gel of Gd³⁺ and Eu³⁺ impregnated with Zn²⁺ and Al³⁺.

The prepared gel is placed in an oven at 130°C and is dried for 59 h, and then kept in a muffle furnace at 1100°C for 2 h, followed by cooling and milling to give a fluorescent powder having a chemical formula of Gd_{1.88}Eu_{0.12}O₃·0.08Zn₀.₉₇Al₀.₀₃O.

### Example 9

14.1308 g of Zn(NO₃)₂·6H₂O and 0.9378 g of Al(NO₃)₃·9H₂O are weighed and dissovled in 100 mL of de-ionized water to prepared a 0.5 mol/L aqueous solution of Zn²⁺ and Al³⁺, wherein the molar ratio of Zn²⁺ to Al³⁺ is 95:5.

22.1166 g of Gd (NO₃)₃·6H₂O and 0.4461 g of Eu(NO₃)₃·6H₂O are weighed and dissolved in de-ionized water to prepare a 0.5 mol/L aqueous solution of Gd³⁺ and Eu^{3+,} wherein the molar ratio of Eu³⁺ to Gd³⁺ is 1:49.

To 10 mL of the 0.5 mol/L aqueous solution of Gd³⁺ and Eu³⁺ are added 8 mL of de-ionized water and 22 mL of absolute ethanol, 0.6 mL of the prepared aqueous solution of Zn²⁺ and Al³⁺, 3.0550 g of citric acid and 4 g of polyethylene glycol 10000. The resulted mixture is stirred for 6 h in a 50°C water bath to give a precursor solution of Gd³⁺ and Eu³⁺ impregnated with Zn²⁺ and Al³⁺. The precursor solution is then placed in an oven at 100°C and aged for 40 h to give a gel of Gd³⁺ and Eu³⁺ impregnated with Zn²⁺ and Al³⁺.

The prepared gel is placed in an oven at 130°C and is dried for 59 h, and then kept in a muffle furnace at 1200°C for 2 h, followed by cooling and milling to give a fluorescent powder having a chemical formula of Gd_{1.96}Eu_{0.04}O₃·0.06Zn_{0.95}Al_{0.05}O.

### Example 10

21.9281 g of Zn(CH₃COO)₂·2H₂O and 0.0375 g of Al(NO₃)₃·9H₂O are weighed and dissovled in 100 mL of de-ionized water to prepared a 1 mol/L aqueous solution of Zn²⁺ and Al³⁺, wherein the molar ratio of Zn²⁺ to Al³⁺ is 99.9:0.1.

62.5670 g of gadolinium oxalate and 1.7201 g of europium oxalate are weighed and dissolved in 20 mL of nitric acid under stirring at 60°C, to which is added de-ionized water to make up to 100 mL to prepare a 1 mol/L aqueous solution of Gd³⁺ and Eu³⁺, wherein the molar ratio of Eu³⁺ to Gd³⁺ is 1:19.

To 8 mL of the 1 mol/L aqueous solution of Gd³⁺ and Eu³⁺ are added 32 mL of absolute ethanol, 0.4 mL of the prepared aqueous solution of Zn²⁺ and Al³⁺, 3.2280 g of citric acid and 4 g of polyethylene glycol 10000. The resulted mixture is stirred for 6 h in a 70°C water bath to give a precursor solution of Gd³⁺ and Eu³⁺ impregnated with Zn²⁺ and Al³⁺. The precursor solution is then placed in an oven at 90°C and aged for 60 h to give a gel of Gd³⁺ and Eu³⁺ impregnated with Zn²⁺ and Al³⁺.

The prepared gel is placed in an oven at 130°C and is dried for 59 h, and then kept in a muffle furnace at 1200°C for 2 h, followed by cooling and milling to give a fluorescent powder having a chemical formula of Gd_{1.9}Eu_{0.1}O₃·0.05Zn_{0.999}Al_{0.001}O.

### Example 11

21.9281 g of Zn(CH₃COO)₂·2H₂O and 0.0375 g of Al(NO₃)₃·9H₂O are weighed and dissovled in 100 mL of de-ionized water to prepared a 1 mol/L aqueous solution of Zn²⁺ and Al³⁺, wherein the molar ratio of Zn²⁺ to Al³⁺ is 99.9:0.1.

34.4375 g of Y₂O₃ and 0.8798 g of Eu₂O₃ are weighed and dissolved in 20 mL of nitric acid under stirring at 40°C, to which is added de-ionized water to make up to 100 mL to prepare a 1 mol/L aqueous solution of Gd³⁺ and Eu³⁺, wherein the molar ratio of Eu³⁺ to Gd³⁺ is 1:19.

To 20 mL of the 1.00 mol/L aqueous solution of Gd³⁺ and Eu³⁺ are added 20 mL of absolute ethanol, 0.2 mL of the prepared aqueous solution of Zn²⁺ and Al³⁺, 11.7590 g of citric acid and 4 g of polyethylene glycol 10000. The resulted mixture is stirred for 4 h in a 60°C water bath to give a precursor solution of Gd³⁺ and Eu³⁺ impregnated with Zn²⁺ and Al³⁺. The precursor solution is then placed in an oven at 80°C and aged for 56 h to give a gel of Gd³⁺ and Eu³⁺ impregnated with Zn²⁺ and Al³⁺.

The prepared gel is placed in an oven at 100°C and is dried for 50 h, and then kept in a muffle furnace at 800°C for 2 h, followed by cooling and milling to give a fluorescent powder having a chemical formula of Gd_{1.9}Eu_{0.1}O₃·0.01Zn_{0.999}Al_{0.001}O.

### Example 12

2.8857 g of Zn(NO₃)₂·6H₂O and 0.0724 g of AlCl₃·6H₂O are weighed and dissovled in 100 mL of de-ionized water to prepared a 0.1 mol/L aqueous solution of Zn²⁺ and Al³⁺, wherein the molar ratio of Zn²⁺ to Al³⁺ is 97:3.

34.1964 g of GdCl₃ and 2.8154 g of EuCl₃ are weighed and dissolved in de-ionized water under stirring at 15°C to prepare 1L of a 0.1 mol/L aqueous solution of Gd³⁺ and Eu³⁺, wherein the molar ratio of Eu³⁺ to Gd³⁺ is 2:23.

To 20 mL of the 0.1 mol/L aqueous solution of Gd³⁺ and Eu³⁺ are added 20 mL of absolute ethanol, 2 mL of the prepared aqueous solution of Zn²⁺ and Al³⁺, 0.8454 g of citric acid and 4 g of polyethylene glycol 10000. The resulted mixture is stirred for 4 h in a 60°C water bath to give a precursor solution of Gd³⁺ and Eu³⁺ impregnated with Zn²⁺ and Al³⁺. The precursor solution is then placed in an oven at 60°C and aged for 60 h to give a gel of Gd³⁺ and Eu³⁺ impregnated with Zn²⁺ and Al³⁺.

The prepared gel is placed in an oven at 100°C and is dried for 48 h, and then kept in a muffle furnace at 1200°C for 2 h, followed by cooling and milling to give a fluorescent powder having a chemical formula of Gd_{1.84}Eu_{0.16}O₃·0.1Zn_{0.97}Al_{0.03}O.

### Example 13

14.1308 g of Zn(NO₃)₂·6H₂O and 0.9378 g of Al(NO₃)₃·9H₂O are weighed and dissovled in 100 mL of de-ionized water to prepared a 0.5 mol/L aqueous solution of Zn²⁺ and Al³⁺, wherein the molar ratio of Zn²⁺ to Al³⁺ is 95:5.

3.4471 g of Y(NO₃)₃·6H₂O, 18.0544 g of Gd(NO₃)₃·6H₂O and 0.4461 g of Eu(NO₃)₃·6H₂O are weighed and dissolved in de-ionized waterto prepared a 0.5 mol/L aqueous solution of Y³⁺, Gd³⁺ and Eu³⁺, wherein the molar ratio of Y³⁺, Gd³⁺, Eu³⁺ is 18:80:2.

To 10 mL of the 0.5 mol/L aqueous solution of Y³⁺, Gd³⁺ and Eu³⁺ are added 5 mL of de-ionized water, 25 mL of absolute ethanol, 1.5 mL of the prepared aqueous solution of Zn²⁺ and Al³⁺, 2.2096 g of citric acid and 4 g of polyethylene glycol 10000. The resulted mixture is stirred for 4 h in a 60°C water bath to give a precursor solution of Y³⁺, Gd³⁺ and Eu³⁺ impregnated with Zn²⁺ and Al³⁺. The precursor solution is then placed in an oven at 70°C and aged for 60 h to give a gel of Y³⁺, Gd³⁺ and Eu³⁺ impregnated with Zn²⁺ and Al³⁺.

The prepared gel is placed in an oven at 150°C and is dried for 75 h, and then kept in a muffle furnace at 1200°C for 2 h, followed by cooling and milling to give a fluorescent powder having a chemical formula of Y_{0.36}Gd_{1.6}EU_{0.04}O₃·0.15Zn_{0.95}Al_{0.05}O.

### Example 14

43.0220 g of Zn(CH₃COO)₂·2H₂O and 1.1502 g Al₂(SO₄)₃ are weighed and dissovled in 100 mL of de-ionized water to prepared a 2 mol/L aqueous solution of Zn²⁺ and Al³⁺, wherein the molar ratio of Zn²⁺ to Al³⁺ is 98:2.

3.4471 g of Y(NO₃)₃·6H₂O, 40.6224 g of Gd(NO₃)₃·6H₂O and 0.4441 g of Eu(NO₃)₃·6H₂O are weighed and dissolved in de-ionized water to prepared a 1 mol/L aqueous solution of Y³⁺, Gd³⁺ and Eu³⁺, wherein the molar ratio of Y³⁺, Gd³⁺, Eu³⁺ is 9:90:1.

To 8 mL of the 1.00 mol/L aqueous solution of Y³⁺, Gd³⁺ and Eu³⁺ are added 32 mL of absolute ethanol, 0.2 mL of the prepared aqueous solution of Zn²⁺ and Al³⁺, 3.2280 g of citric acid and 4 g of polyethylene glycol 10000. The resulted mixture is stirred for 4 h in a 60°C water bath to give a precursor solution of Y³⁺, Gd³⁺ and Eu³⁺ impregnated with Zn²⁺ and Al³⁺. The precursor solution is then placed in an oven at 70°C and aged for 60 h to give a gel of Y³⁺, Gd³⁺ and Eu³⁺ impregnated with Zn²⁺ and Al³⁺.

The prepared gel is placed in an oven at 120°C and is dried for 48 h, and then kept in a muffle furnace at 1000°C for 2 h, followed by cooling and milling to give a fluorescent powder having a chemical formula of Y_{0.18}Gd_{1.8}Eu_{0.02}O₃·0.05Zn_{0.98}Al_{0.02}O.

### Example 15

21.9281 g of Zn(CH₃COO)₂·2H₂O and 0.0375 g of Al(NO₃)₃·9H₂O are weighed and dissovled in 100 mL of de-ionized water to prepared a 1 mol/L aqueous solution of Zn²⁺ and Al³⁺, wherein the molar ratio of Zn²⁺ to Al³⁺ is 99.9:0.1.

30.2000 g of yttrium oxalate, 29.6370 g of gadolinium oxalate and 1.7201 g of europium oxalate are weighed and dissolved in 27 mL of hydrochloric acid under stirring at 60°C, followed by adding de-ionized water to make up to 100 mL to preapre a 1 mol/L aqueous solution of Y³⁺, Gd³⁺ and Eu³⁺, wherein the molar ratio of Y³⁺, Gd³⁺, Eu³⁺ is 50:45:5.

To 4 mL of the 1.00 mol/L aqueous solution of Y³⁺, Gd³⁺ and Eu³⁺ are added 6 mL of de-ionized water, 30 mL of absolute ethanol, 0.48 mL of the prepared aqueous solution of Zn²⁺ and Al³⁺, 2.5824 g of citric acid and 4 g of polyethylene glycol 10000. The resulted mixture is stirred for 4 h in a 60°C water bath to give a precursor solution of Y³⁺, Gd³⁺ and Eu³⁺ impregnated with Zn²⁺ and Al³⁺. The precursor solution is then placed in an oven at 70°C and aged for 60 h to give a gel of Y³⁺, Gd³⁺ and Eu³⁺ impregnated with Zn²⁺ and Al³⁺.

The prepared gel is placed in an oven at 120°C and is dried for 48 h, and then kept in a muffle furnace at 1000°C for 2 h, followed by cooling and milling to give a fluorescent powder having a chemical formula of Y₁Gd_{0.9}Eu_{0.1}O₃·0.12Zn_{0.999}Al_{0.001}O.

### Example 16

43.0220 g of Zn(CH₃COO)₂·2H₂O and 1.1502 g of Al₂(SO₄)₃ are weighed and dissovled in 100 mL of de-ionized water to prepared a 2 mol/L aqueous solution of Zn²⁺ and Al³⁺, wherein the molar ratio of Zn²⁺ to Al³⁺ is 98:2.

19.1939 g of Y₂O₃, 3.6250 g of Gd₂O₃ and 0.8798 g of Eu₂O₃ are weighed and dissolved in 27 mL of hydrochloric acid under stirring at 60°C, followed by added de-ionized water to make up to 100 mL to preapre a 1 mol/L aqueous solution of Y³⁺, Gd³⁺ and Eu³⁺, wherein the molar ratio of Y³⁺, Gd³⁺, Eu³⁺ is 85:10:5.

To 10 mL of the 1.00 mol/L aqueous solution of Y³⁺, Gd³⁺ and Eu³⁺ are added 10 mL of de-ionized water, 20 mL of absolute ethanol, 0.2 mL of the prepared aqueous solution of Zn²⁺ and Al³⁺, 3.9965 g of citric acid and 4 g of polyethylene glycol 10000. The resulted mixture is stirred for 4 h in a 60°C water bath to give a precursor solution of Y³⁺, Gd³⁺ and Eu³⁺ impregnated with Zn²⁺ and Al³⁺. The precursor solution is then placed in an oven at 70°C and aged for 60 h to give a gel of Y³⁺, Gd³⁺ and Eu³⁺ impregnated with Zn²⁺ and Al³⁺.

The prepared gel is placed in an oven at 120°C and is dried for 48 h, and then kept in a muffle furnace at 1300°C for 2 h, followed by cooling and milling to give a fluorescent powder having a chemical formula of Y_{1.7}Gd_{0.2}Eu_{0.1}O₃·0.1Zn_{0.98}Al_{0.02}O.

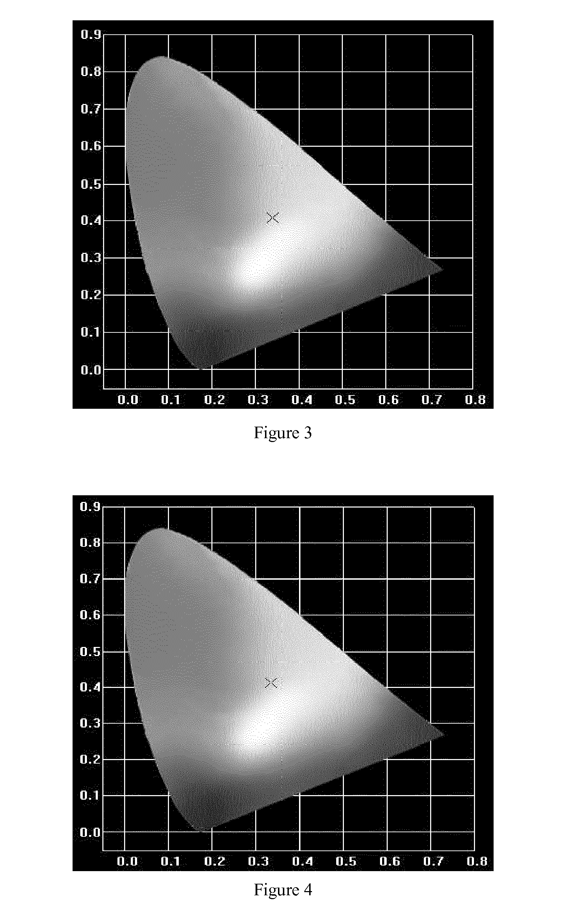

The sample prepared in Example 6 is taken as an example. Refer to Figure 2, which shows the spectra of the Y_{1.90}Eu_{0.10}O₃·0.05Zn_{0.97}Al_{0.03}O fluorescent powder prepared in the above Example 6 under the excitation of cathode rays, wherein a is the spectrum of the sample prepared in Example 6 under the excitation of cathode rays of 7 kV, and b is the spectrum of the sample prepared in Example 6 under the excitation of cathode rays of 5 kV. The spectra are obtained on Shimadzu RF-5301PC Spectrometer. Figure 3 shows the color coordinates of the Y_{1.90}Eu_{0.10}O₃·0.05Zn_{0.97}Al_{0.03}O fluorescent powder prepared in Example 6 of the present invention under the excitation of cathode rays of 5 kV, and Figure 4 shows the color coordinates of the Y_{1.90}Eu_{0.1}O₃·0.05Zn_{0.97}Al_{0.03}O fluorescent powder prepared in Example 6 of the present invention under the excitation of cathode rays of 7 kV. It can be seen from Figures 3 and 4 that the prepared fluorescent powder can achieve color adjustability under the excitation of cathode rays of different voltages. The color coordinates in Figure 3 are: X = 0.3406, Y = 0.4074; and the color coordinates in Figure 4 are: X = 0.3357, Y=0.4136.

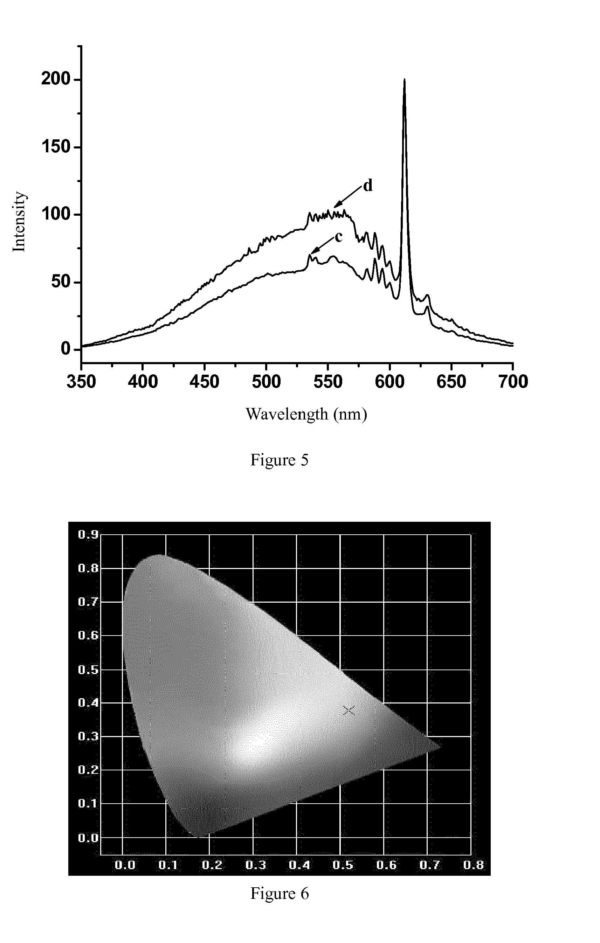

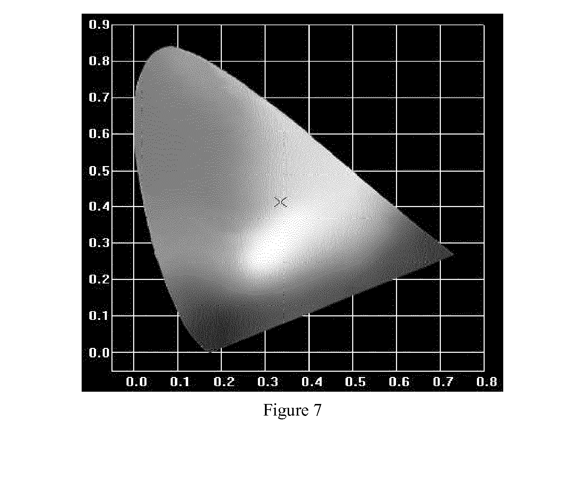

Figure 5 shows the spectra of the Y_{1.90}Eu_{0.10}O₃ fluorescent powder blended with various proportions of Zn_{0.97}Al_{0.03}O prepared in Examples 5 and 6 of the present invention under the excitation of cathode rays of 7 kV, wherein c is the emission spectrum of the Y_{1.90}Eu_{0.10}O₃·0.03Zn_{0.97}Al_{0.03}O fluorescent powder and d is the emission spectrum of the Y_{1.90}Eu_{0.10}O₃·0.05Zn_{0.97}Al_{0.03}O fluorescent powder. The spectra are obtained on Shimadzu RF-5301PC Spectrometer. It can be seen from the figure that the luminescent brightness of the prepared fluorescent powder under the excitation of cathode rays is increased because ZnAlO can effected lead out the electrons accumulated on the surface of the fluorescent powder. Figure 6 shows the color coordinates of the Y_{1.90}Eu_{0.10}O₃·0.03Zn_{0.97}Al_{0.03}O fluorescent powder prepared in Example 5 of the present invention under the excitation of cathode rays of 7 kV; and Figure 7 shows the color coordinates of the Y_{1.90}Eu_{0.10}O₃·0.05Zn_{0.97}Al_{0.03}O fluorescent powder prepared in Example 6 of the present invention under the excitation of cathode rays of 7 kV. It can be seen from Figures 6 and 7 that the prepared fluorescent powder comprising different proportions of Zn₍₁₋ₘ₎AlₘO can achieve color adjustability. The color coordinates in Figure 6 are: X = 0.5189, Y = 0.3781; and the color coordinates in Figure 7 are: X = 0.3357, Y=0.4136.

It can be seen from the results in the Examples and Comparative Examples that in the method for preparing the color-adjustable fluorescent powder, a sol-gel method is employed, and a color-adjustable fluorescent powder having superior luminescent performance is prepared by controlling the ratio of the raw materials. The preparation method has a simple process and low cost and has a broad production and application prospect.

Described above are only preferred embodiments of the present invention, which are not intended to limit the present invention. All modifications, equivalent substitutions and improvements within the spirit and principle of the present invention shall be within the scope of the present invention.

## Claims

1. A color-adjustable fluorescent powder, **characterized in that** the color-adjustable fluorescent powder has a chemical formula of (YₐGd_{b}Eu_{c})₂O₃·xZn₍₁₋ₘ₎AlₘO, wherein 0 ≤ a ≤ 0.99, 0 ≤ b ≤ 0.99, 0.01 ≤ c ≤ 0.08, and a + b + c = 1, a and b are not simultaneously 0, x is a molar ratio of Zn₍₁₋ₘ₎AlₘO to (YₐGd_{b}Eu_{c})₂O₃, 0.01 ≤ x ≤ 0.20, and 0.001 ≤ m ≤ 0.05.

2. A method for preparing a color-adjustable fluorescent powder, comprising the steps of:
preparing a solution of Zn²⁺ and Al³⁺, and preparing a solution of Y³⁺, Eu³⁺ and Gd³⁺ or of Eu³⁺ and Gd³⁺ or of Y³⁺ and Eu³⁺ according to molar ratio of corresponding elements in a chemical formula of (YₐGd_{b}Eu_{c})₂O₃;
taking the above solutions according to corresponding molar ratio in a chemical formula of (YₐGd_{b}Eu_{c})₂O₃·xZn₍₁₋ₘ₎AlₘO, wherein 0 ≤ a ≤ 0.99, 0 ≤ b ≤ 0.99, 0.01 ≤ c ≤ 0.08, and a + b + c = 1, a and b are not simultaneously 0, x is a molar ratio of Zn₍₁₋ₘ₎AlₘO to (YₐGd_{b}Eu_{c})₂O₃, 0.01 ≤ x ≤ 0.20, and 0.001 ≤ m ≤ 0.05; and adding an alcohol-water mixed solution contain a complexing agent, and a surfactant to give a precursor solution; and
aging the precursor solution, calcinating, cooling and milling to give the color-adjustable fluorescent powder.

3. The method for preparing a color-adjustable fluorescent powder according to Claim 2, **characterized in that** the solution of Zn²⁺ and Al³⁺ is prepared from soluble zinc salt and aluminum salt, respectively, which are selected from at least one of corresponding acetate, nitrate, chloride and sulfate.

4. The method for preparing a color-adjustable fluorescent powder according to Claim 2, **characterized in that** the solution of Y³⁺, Eu³⁺ and Gd³⁺ or of Eu³⁺ and Gd³⁺ or of Y³⁺ and Eu³⁺ is prepared from corresponding soluble salts thereof which are selected from at least one of nitrate and chloride.

5. The method for preparing a color-adjustable fluorescent powder according to Claim 2, **characterized in that** the solution of Y³⁺, Eu³⁺ and Gd³⁺ or of Eu³⁺ and Gd³⁺ or of Y³⁺ and Eu³⁺ is prepared as follows: using oxides or oxalates of rare earth elements as raw materials, and dissolving the oxides or oxalates of the rare earth elements in hydrochloric acid or nitric acid at 15°C∼100°C under stirring.

6. The method for preparing a color-adjustable fluorescent powder according to Claim 2, **characterized in that** the complexing agent is citric acid.

7. The method for preparing a color-adjustable fluorescent powder according to Claim 2, **characterized in that** the alcohol-water mixed solution is a mixed liquid of ethanol and water, wherein the volume ratio of water to ethanol is 1 : 1-7.

8. The method for preparing a color-adjustable fluorescent powder according to Claim 2, **characterized in that** the surfactant is at least one of polyethylene glycol 6000, polyethylene glycol 8000, polyethylene glycol 10000 and polyethylene glycol 20000.

9. The method for preparing a color-adjustable fluorescent powder according to Claim 2, **characterized in that** the aging comprises placing the precursor solution in an oven at 100∼200°C and aging for 48-96 h.

10. The method for preparing a color-adjustable fluorescent powder according to Claim 2, **characterized in that** the calcinating comprises heating at 800∼1300°C for 0.5∼6 h.
